# EUROPEAN PATENT APPLICATION

(11) **EP 1 018 713 A1**
(43) Date of publication of application: **12.07.2000**
(21) Application number: 99126228.8
(22) Date of filing: 30.12.1999
(51) Int. Cl.: G07F 7/12

(54) **Imitation judging device**

(30) Priority: 07.01.1999 JP 170499
(71) Applicant: NEC CORPORATION, Tokyo (JP)
(72) Inventor: Sakaguchi, Tomoyuki, Minato-ku, Tokyo (JP)
(74) Representative: VOSSIUS & PARTNER

(57) **Abstract**

An imitation judging device according to the present invention includes: a microprocessor which is mounted in an electronic device so as to generate an interrogating bit string for truth and false judgment; and a truth and false judgment processing circuit, which is mounted within a target device connected to the electronic device, and which judges about truth and false of the target device based on the interrogating bit string from the microprocessor. The truth and false judgment processing circuit includes: a calculation circuit for receiving the interrogating bit string sent from the microprocessor of the electronic device, to thereby generate a calculational result bit string applied with a random number calculation processing; and a circuit for returning the calculational result bit string as a responding bit string, toward the microprocessor of the electronic device.

## Description

The present invention relates to an imitation judging device to be used for a truth and false judgment for discriminating imitations of data storing medium such as ID card, memory card, credit card, and of option device to be connected to an electronic device or apparatus.

Conventionally, imitation judging device for judging imitations of a truth and false judgment target device such as memory card has been generally utilized such as for management of restricted area, management of entering and leaving person, and for electronic money and IC card type of credit card/pre-paid card for which a security is emphasized.

Recently, however, it is going possible in an electronic device to realize a high-level security technique and function by a software only, without relying on hardware, thanks to development of software technique. In this case, it is permitted to realize a security function by an addition only such as of a general purpose ROM or RAM. However, on the other hand, there is feared an occurrence of trouble such as due to infringement of software copyright by a reproduction of ROM, and due to addition of false circuit and parts which are not guaranteed as electronic device.

To respond to this demand, Japanese Patent Application Laid-Open No. HEI-9-501529 (published on February 10, 1997) describes an electronic device, to which a data storing medium such as an IC card is connected, and which device has a function to conduct a truth and false judgment for the data storing medium. In the electronic device shown in this publication, there is proposed a method for conducting a truth and false judgment between the electronic device and the data storing medium, by adding a dedicated hard-wired logic such as into the electronic device and the data storing medium, and exchanging a key-information (or authenticating information) between them at a high speed during a power up sequence at the time of power on or a reset sequence.

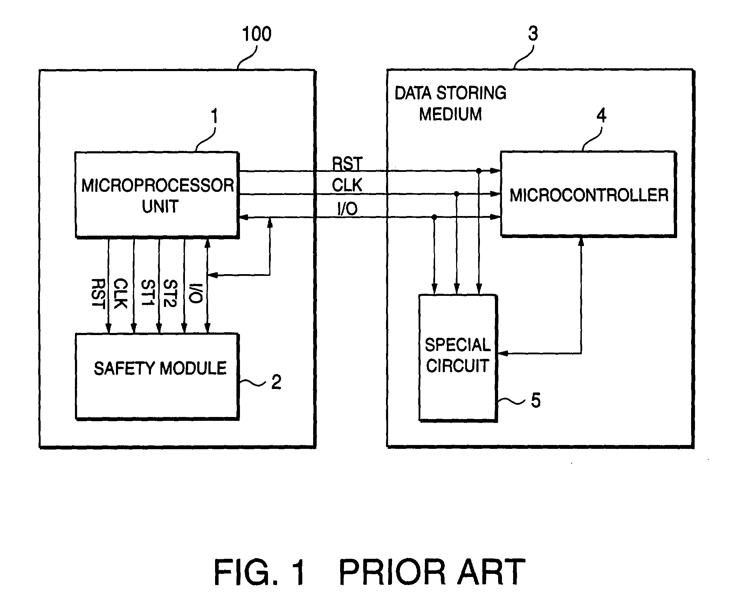

As shown in FIG. 1, in the truth and false judgment method described in the publication, it is detected whether a data storing medium 3 is a genuine article or not, by an electronic device 100. Namely, the electronic device 100 in FIG. 1 exchanges an authenticating information between a safety module 2 and a special circuit 5 of data storing medium side, via microprocessor unit 1. The exchange of the authenticating information is performed during a period of time within a power up/reset sequence where signals are indefinite, and no dedicated signal lines for exchanging the authenticating information are provided.

The truth and false judgment method shown in FIG. 1 has such a defect that the operation for truth and false judgment is performed only during a power up/reset sequence where signals are indefinite.

Further, since there is presupposed an operation within a power up sequence at the time of power on or within a reset sequence, a dedicated hardware for realizing the truth and false judgement is essential in the microprocessor unit 1 in the electronic device 100 and the microcontroller 4 in the data storing medium 3. As such, there also exists such a problem of excessive cost and of inappropriateness, in case of adding a security function for performing a truth and false judgment into an option device of consumer appliances such as manufactured at many types and at a small quantity.

In option devices for consumer appliances, it is rather likely that a security at a level as high as the aforementioned Japanese Patent Application Laid-Open No. HEI-9-501529 is not required. In this case, it is possible to substantially prevent such as production of an imitation, if a cost required for a third party to analyze a concrete method for developing an imitation exceeds a profit to be obtained such as by manufacturing imitations based on the analyzing result.

It is therefore a main object of the present invention to provide an imitation judging device which can be realized at an optimal cost even for a small quantity manufactured product, irrespectively of a type of a truth and false judgment target device.

The imitation judging device according to the present invention includes: a microprocessor which is mounted in an electronic device so as to generate an interrogating bit string for truth and false judgment; and a truth and false judgment processing circuit, which is mounted within a target device connected to the electronic device, and which judges about truth and false of the target device based on the interrogating bit string from the microprocessor. The truth and false judgment processing circuit includes: a calculation circuit for receiving the interrogating bit string sent from the microprocessor of the electronic device, and responsive to the interrogating bit string, generating a calculational result bit string applied with a random number calculation processing; and a circuit for returning the calculational result bit string as a responding bit string, toward the microprocessor of the electronic device.

The microprocessor compares the calculational result bit string received from the truth and false judgment processing circuit, with a reference bit string, to thereby detect truth and false of the target device. The reference bit string is a calculation result to be obtained when the microprocessor performs a random number calculation processing for the interrogating bit string, in a manner identical with that performed at the truth and false judgment processing circuit of the target device.

The truth and false judgment processing circuit in the present invention does not depend on main functions of a truth and false judoment target device, at all. As such, the present invention can be applied to any type of option device (for example, those having no electrical connections as essential function thereof, such as an ink cartridge of a printer).

Further, in the present invention, confirmation of truth and false and/or erroneous mounting can be performed at an arbitrary timing, by constituting such that the truth and false judgment is started by a control signal from the microprocessor in the electronic device side. If a mechanism of live wire insertion/removal is provided, it is possible to perform judgment of truth and false and/or erroneous mounting of the target device, without conducting power reset or system reset for the electronic device. Detailed explanation of concrete live wire insertion/removal method is omitted, since it is well known to one skilled in the art.

Further, when the truth and false judgment processing circuit is constituted of a ROM built-in one chip microprocessor 39 in which it is impossible to read out a program from the exterior of the chip, the circuit can be inexpensively constituted even in case of small quantity manufacturing.
FIG. 1 is a block diagram showing a conventional imitation judging device;
FIG. 2 is a block diagram showing an imitation judging device according to a first embodiment of the present invention;
FIG. 3 is a circuit diagram showing details of a truth and false judgment processing circuit;
FIG. 4 is a block diagram showing a second embodiment of the present invention;
FIG. 5 is a flowchart showing an operation of a ROM built-in one chip microprocessor of the imitation judging device in FIG. 4;
FIG. 6 is a flowchart showing an operation of a host microprocessor of the imitation judging device in FIG. 4;
FIG. 7 is a view for explaining a calculational processing operation by the ROM built-in one chip microprocessor of the imitation judging device in FIG. 4;
FIG. 8 is a timing chart showing an interoperation between the host microprocessor and the ROM built-in one chip microprocessor of the imitation judging device in FIG. 4;
FIG. 9 is a block diagram showing a third embodiment of the present invention; and
FIG. 10 is a timing chart showing an interoperation between the host microprocessor and the ROM built-in one chip microprocessor of the imitation judging device in FIG. 9.

There, will be described hereinafter the embodiments according the present invention, with reference to the accompanying drawings.

Each of the embodiments of the present invention relates to an electronic device to which a target device to be judged a truth and false is connected. The target device is, for example, data storing medium such as IC card, memory card, a peripheral device and a option device. The target device has a truth and false judgment processing circuit which returns a value to be calculated based on: an interrogating bit string for truth and false judgment from the electronic device; and a key information held in the truth and false judgment processing circuit. The electronic device has a microprocessor for communicating with the truth and false judgment processing circuit.

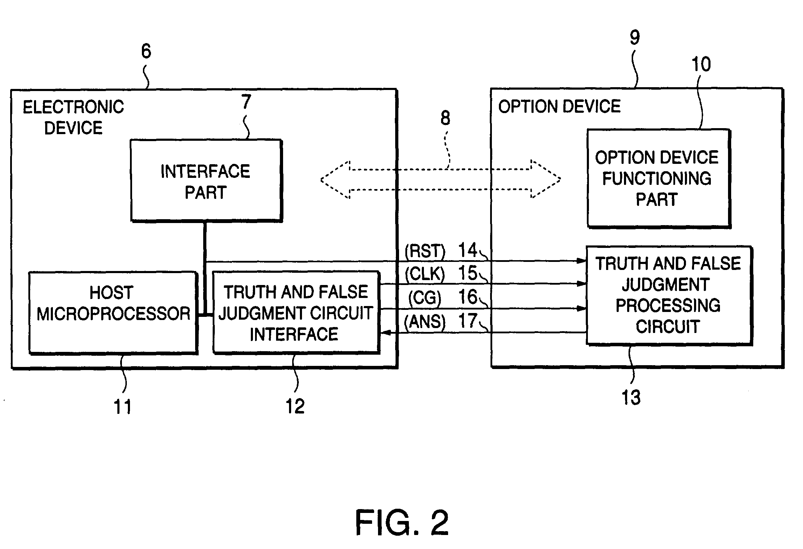

FIG. 2 is a block diagram showing an imitation judging device according to a first embodiment of the present invention. This embodiment of the present invention is constituted to include: an interface 8 for interconnecting an option device 9 as a truth and false judgment target device and an electronic device 6 (the interface 8 embraces both of what is accompanied with electric connection, and what has mechanical connection only); an option device functioning part 10; a truth and false judgment processing circuit 13 for processing a truth and false information provided in the option device; and additional signal lines 14 through 17 for interconnecting the truth and false judgment processing circuit of option device 9 and the electronic device 6 (here, lines of power supply for the truth and false judgment processing circuit are omitted).

The electronic device 6 has an interface part 7 connected to the interface 8, a host microprocessor 11 for controlling whole circuits in the electronic device 6 and a truth and false judgement circuit interface 12. The host microprocessor 11 has an UNIX operating system. The truth and false judgement circuit interface 12 receives a clock (CLK) signal and a CG (challenge) signal from the host microprocessor 11 and receives an answer (ANS) signal from the option device 9, and synchronizes the CG and ANS signals with the CLK signal from the host microprocessor.

The CG signal and the ANS signal are control signals of a Challenge-Response system of the UNIX. The CG signal generates when a power of the electrode device 6 becomes ON. The CG signal may generate when the option device 9 is set to the electronic device 6 to be connected to it through the interface 8.

The option device functioning pert 10 is a circuit for performing an optional function (for example, data storing) using the interface 8.

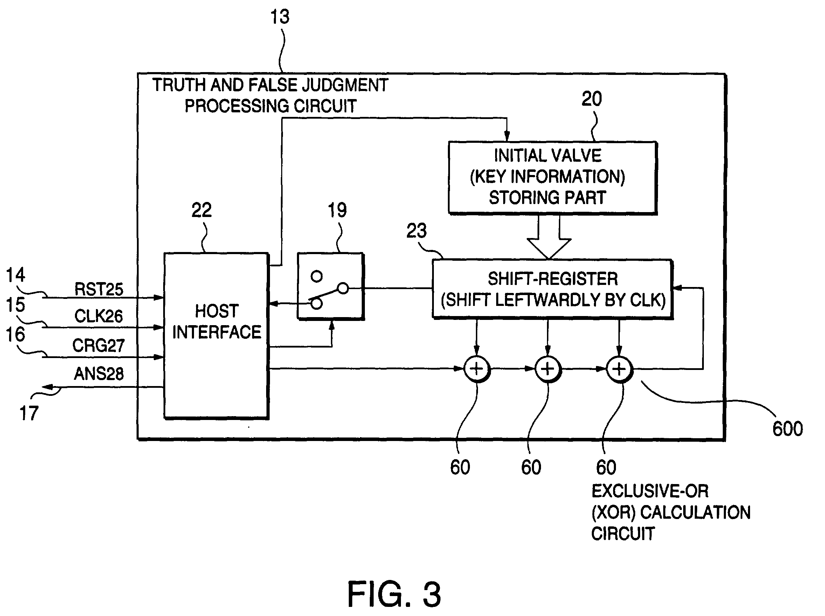

FIG. 3 is a circuit diagram showing an outline of the truth and false judgment processing circuit 13 in FIG. 2. Host interface part 22 receives a bit string (interrogating bit string) sent from a host microprocessor 11 at the electronic device 6 side, via truth and false judgment circuit interface 12. For the received interrogating bit string, there is created a bit string applied with a calculational processing by a random number calculation processing circuit 600. The random number calculation processing circuit 600 has a shift-register 23 including an initial value (key information) storing part 20 and an exclusive-OR (XOR) calculation circuit 60. Only a final result (responding bit string) of the generated bit string is sent back to the host microprocessor 11 by a calculation output controlling 19, via host interface part 22 and truth and false judgment circuit interface 12.

The calculational processing within the random number calculation processing circuit 600 is rendered to be such a content that the content of the initial value storing part 20 and the calculational processing comprising the shift-register 23 and the exclusive-OR calculation circuit 60 are difficult to be concretely estimated or predicted even by observing the signal lines 14 through 17 used for connection.

More concretely, in the truth and false judgment processing circuit 13 of FIG. 3, the initial value of the shift-register 23 is stored in the initial value storing part 20 such as constituted of nonvolatile memory, and is constituted to be loaded into the shift-register 23 based on a reset (RST) signal 25 of the signal line 14 for initializing the truth and false judgment processing circuit 13. From the outside, it is impossible to read out a combination of the initial value (value stored in the initial value storing part 20) of the shift-register 23 with bits to be extracted from the shift-register 23. There is sent a sufficient length of interrogating bit string from the host microprocessor 11 of the electronic device 6 toward the host interface 22, as the CG signal 27 on the signal line 16 via truth and false judgment circuit interface 12 so as to perform a random number calculation processing, and its calculation result is sent back to the host interface part 22. The calculation result (responding bit string of the ANS signal 28) is sent from the host interface 22 toward the host microprocessor 11. At this time, the calculation result becomes a value which is obtained by disordering an M sequence of pseudorandom number by the interrogating bit string from the host microprocessor 11. Thus, it becomes sufficiently difficult to analyze the calculation content, even by observing the signal lines 14 through 17.

At the host microprocessor 11, performed by a software is a calculation identical with the truth and false judgment processing circuit 13, and it is judged whether the result is identical with the responding bit string received from the truth and false judgment processing circuit 13. In case of inconsistency of the judgment result, it is decided that the option device 9 is illegal or inappropriate.

It is possible to extremely simplify the processing content of the truth and false judgment processing circuit 13. As such, it is possible to readily constitute an equivalent one by utilizing a one-chip microprocessor (the program content of which should not be read out to the exterior) which is inexpensive and small-sized, and has a limited processing ability. Therefore, the truth and false judgement processing circuit 13 is independent to the option device functioning part 10, and no dedicated hardware is included in the option device functioning part 10.

Thus, there is obtained such an effect that it becomes possible to inexpensively decide a correctness of an option device to be manufactured even at a small quantity, to thereby prevent an imitation.

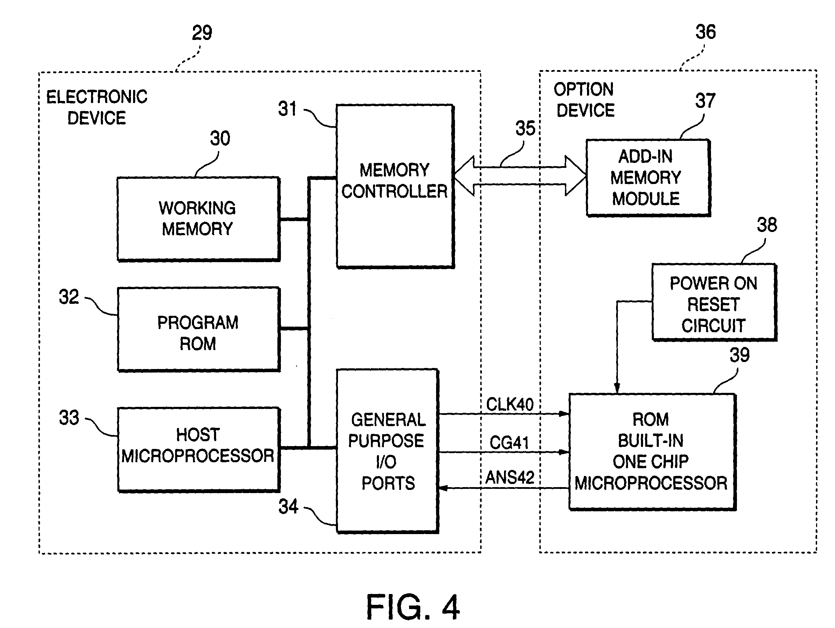

FIG. 4 is a block diagram showing an imitation judging device according to a second embodiment of the present invention. Referring to FIG. 4, option device 36 is an add-in memory module of a microprocessor. Shown in FIG. 4 are the option device 36 and an electronic device 29 to which the option device 36 is connected.

The option device 36 (add-in memory module) includes: an add-in memory module part 37 serving as an add-in memory; a ROM built-in one chip microprocessor 39 corresponding to the truth and false judgment processing circuit 13 in FIG. 1; and appendant circuits (power on reset circuit 38 and clock supply circuit not shown).

The ROM built-in one chip microprocessor 39 has therein: a ROM for storing a program and fixed data; a RAM as a working area; and an appropriate number of general purpose I/O ports. This ROM built-in one chip microprocessor 39 should be constituted such that its program contents can be never read out from the exterior. Such a one chip microprocessor is already commercially available, and a detailed explanation thereof is omitted.

Further, the electronic device 29 includes: a host microprocessor 33; a program ROM 32 for storing a program to be executed at the host microprocessor 33, and fixed data; a working memory 30 for storing a working area of the host microprocessor 33, and variable data; a memory controller 31 for processing writing into/reading from the add-in memory module part 37; and general purpose I/O ports 34 for communicating with the ROM built-in one chip microprocessor 39 which is a truth and false judgment processing circuit. In addition, various I/O processing blocks are connected to the electronic device 29 depending on its specification. However, such blocks are omitted, since they are not absolutely necessary for the present invention and they are well known to an artisan.

The general purpose I/O ports 34 built in both of the electronic device 29 and the option device 36 has: very common output ports the H level and L level of which can be set by a software; and very common input ports in which it is possible to detect by a software whether the terminals of ports are in H level or L level. The general purpose I/O ports 34 has the same function as the truth and false judgement circuit interface 12 of Fig. 2.

The memory controller 31 and the add-in memory module part 37 are interconnected via general add-in memory interface 35. For example, this add-in memory interface 35 is constituted such as of address bus, data bus, RD/WR signal, when a RAM of a static type is used for the add-in memory module 37. When a RAM of a dynamic type is used for the add-in memory module 37, the add-in memory interface 35 is constituted such as of: multiplexed address bus, data bus, row address strobe (RAS) signal; column address strobe (CAS) signal; an output enable (OE) signal; and a writing enable (WE) signal. In case of the embodiment of the present invention, any type of this part of interface 35 is not inconvenient.

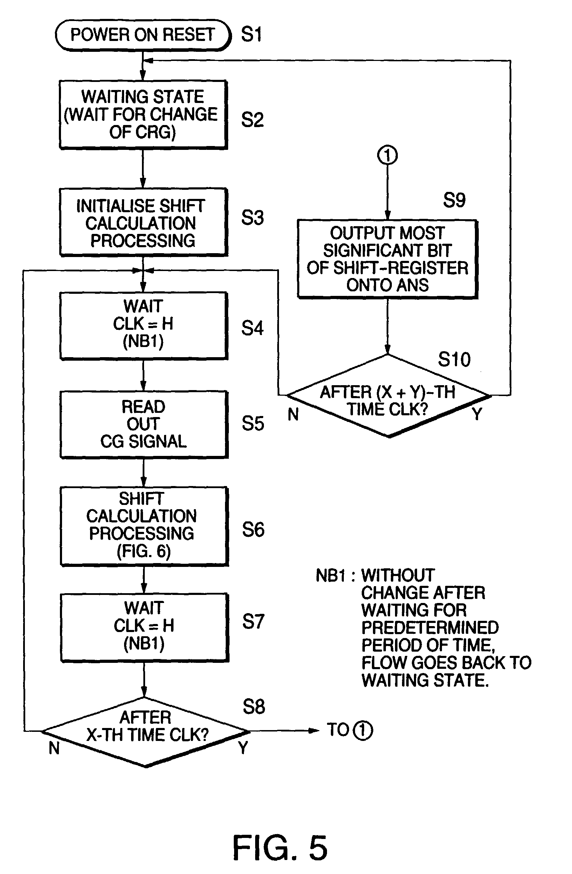

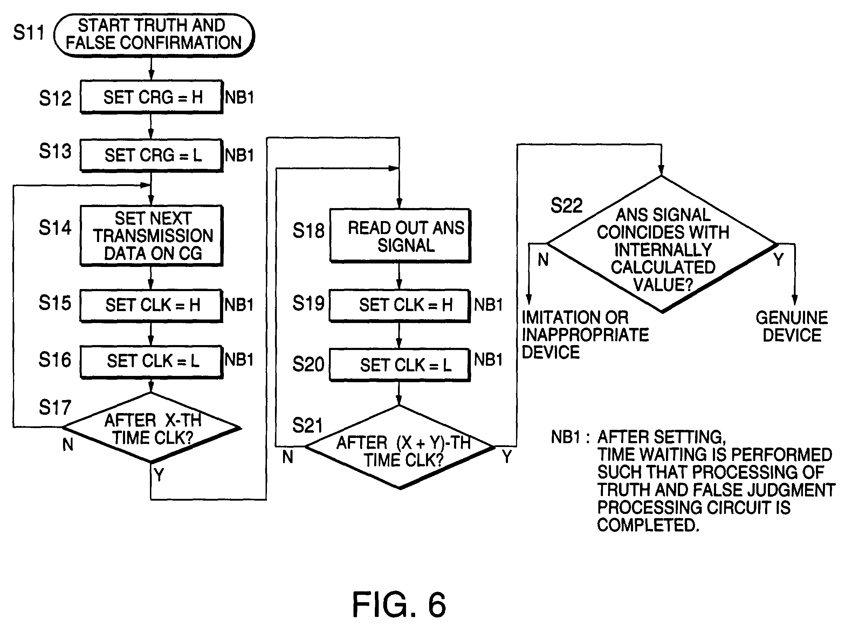

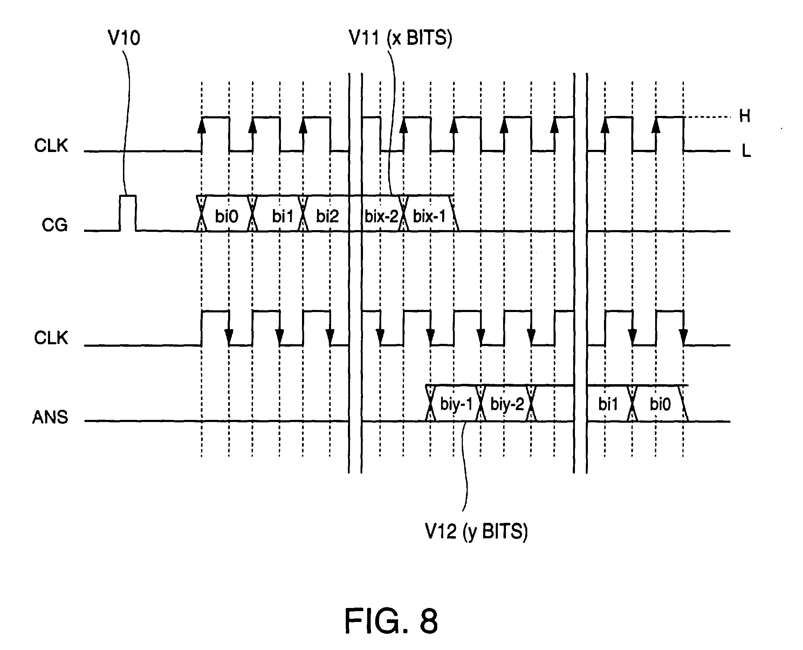

There will be described hereinafter an operation of the second embodiment in FIG. 4. Firstly, there will be explained an operation of the ROM built-in one chip microprocessor 39 as a truth and false judgment processing circuit, with reference to a flowchart of FIG. 5. Simultaneously, there will be explained an operation of the host microprocessor 33, with reference to a flowchart of FIG. 6. Further, a timing chart at that time is shown in FIG. 8, so as to understand a timing relation between the operations of them. Here, it is assumed that a bit string (interrogating bit string V11) to be sent out from the host microprocessor 33 has a length of x bits, an another bit string (responding bit string V12) to be returned from the ROM built-in one chip microprocessor 39 has a length of y bits.

Firstly, the ROM built-in one chip microprocessor 39 is initialized (at step S1) by the power on reset circuit 38 due to power on, and falls into a waiting state (at step S2).

In the waiting state (at step S2), the ROM built-in one chip microprocessor 39 falls into a state for waiting a change in a CG (Challenge) signal 41 from the general purpose I/O ports 34.

The host microprocessor 33 changes the CG signal 41, at an arbitrary time at which the host microprocessor 33 desires to judge the truth and false of the option device 36 (at steps S12, S13). In this way, the host microprocessor 33 starts sending the interrogating bit string V11 to thereby notify or instruct the ROM built-in one chip microprocessor 39 to confirm the truth and false of the option device 36.

Upon detecting change in the CG signal 41, the ROM built-in one chip microprocessor 39 in the waiting state initializes a variable S (at step S3) to be used for a shift calculation processing (corresponding to the shift-register 23 in FIG. 3). As a value to be initialized, there is used a value (corresponding to the initial value storing part 20 of FIG. 3) held in a ROM. In FIG. 1, this operation corresponds to an operation for reading out an initial value by the RST signal in Fig. 2.

The host microprocessor 33 sets a first bit (bit 0) of data (interrogating bit string V11) to be sent to the ROM built-in one chip microprocessor 39, on the CG signal 41 of the general purpose I/O ports 34 (at step S14).

The host microprocessor 33 thereafter renders the CLK signal 40 of the general purpose I/O ports 34 to be H (at step S15).

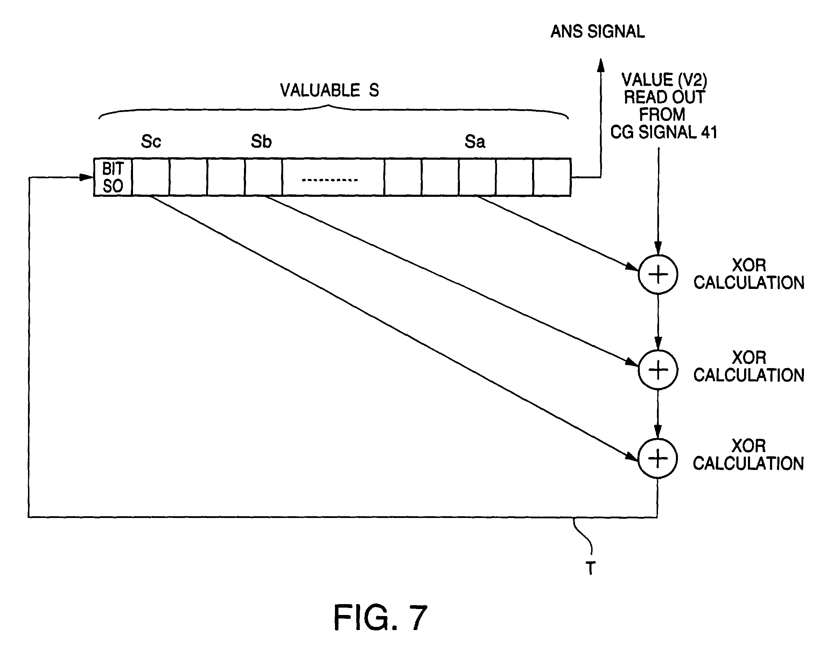

Upon detecting that the CLK signal 40 has changed to H (at step S4), The ROM built-in one chip microprocessor 39 reads out the CG signal 41 (interrogating bit string V11). Based on this readout, the ROM built-in one chip microprocessor 39 calculates, serially and in a one-by-one calculation result using manner, an exclusive OR of: a value (V2 in FIG. 7) of this CG signal 41; and each of the predetermined bit Sa, bit Sb,.... (corresponding to the output of the initial value storing part 20 of FIG. 3) in the valuable S; and generates the calculation result T. Thereafter, the ROM built-in one chip microprocessor 39 shifts the variable S by 1 bit(V3 in FIG. 7) and substitutingly insert the calculation result T into a bit S0, to thereby update the variable S (at step S6).

The host microprocessor 33 waits for a period of time sufficient for completing the aforementioned processing, and then render the CLK signal 40 of the general purpose I/O ports 34 to be L (at step S16). Thereafter, whenever the host microprocessor 33 operates the CLK signal 40 of the general purpose I/O ports 34, the host microprocessor 33 shall perform a subsequent operation after waiting a sufficient period of time during which the ROM built-in one chip microprocessor 39 completes the processing due to change in the CLK signal 40.

When the ROM built-in one chip microprocessor 39 detects that the CLK signal 40 has changed into L, the ROM built-in one chip microprocessor 39 confirms what is the number of times for this change. When this change is after the x times (x is a bit length of the interrogating bit string), the ROM built-in one chip microprocessor 39 outputs a value of a most significant bit of the variable S (variable S after updating) as an ANS signal 42 (responding bit string V12) (at steps S8, S9). When this change is after (x+y) times (y is a bit length of the responding bit string), the ROM built-in one chip microprocessor 39 terminates the processing and returns, to its waiting state (at step S10). Otherwise, the ROM built-in one chip microprocessor 39 waits for a state that the CLK signal becomes H (at step S4).

In turn, the host microprocessor 33 repeats the steps S14 to S17 until the x-th time of the CLK output. In case of the CLK output after the x-th time, the host microprocessor 33 reads out a value of the ANS signal 42 (the most significant bit of responding bit string V12) via the general purpose I/O ports 34 (at step S18), renders the CLK signal 40 to be H (at step S19), and further renders the CLK signal 40 to be L (at step 20). The steps S18 to S21 are repeated until the (x+y)-th time of CLK output, and the host microprocessor 33 successively performs a shift processing of the ANS signal 42 as read out, so as to read out a state of the variable S (responding bit string V12) which has been established at the time of the x-th time.

Upon completion of readout of the responding bit string V12, the host microprocessor 33 performs a calculation identical with what is performed by the ROM built-in one chip microprocessor 39, and confirms whether the result of the calculation coincides with the responding bit string V12 as read out. Failing coincidence, the host microprocessor 33 decides that the option device is an imitation or inappropriate (at step S22).

The values of x, y and the initial value (key information) can be arbitrarily selected, in this embodiment. The values of x and y can be arbitrarily selected, and the larger, the more difficult to analyze them so that imitations can be hardly fabricated. In practice, those values are to be determined depending on: a period of time which is allowed for judging truth and false; an ability of the ROM built-in one chip microprocessor 39; and a desired complexity of analysis.

The exclusive OR processing- shift calculation processing shown in FIG. 7 is an random number generating algorithm of an M sequence if the CG signal 41 (interrogating bit string V11) is not included in the exclusive OR processing. As such, the exclusive OR processing of the present system is expected to have a sufficient randomness. Further, the variable S, which is a calculation result at the shift-register (corresponding to the shift-register 23 of FIG. 3), is firstly initialized and then fully affected by all of the CG signal 41 (interrogating bit string V11) transmitted via general purpose I/O ports 34 from the host microprocessor 33 after the initialization. As a result, there is necessarily affected the responding bit string V12 to be sent from the ROM built-in one chip microprocessor 39 toward the host microprocessor 33. Thus, there is obtained such an effect that it becomes more difficult to perform an analysis of a concrete calculation content, even by an observation of the signals so as to fabricate an imitation of the truth and false judgment processing circuit.

Further, as explained about the add-in memory module in the second embodiment, the interface between the host microprocessor 33 and the ROM built-in one chip microprocessor 39 does not depend on main functions of an option device, at all. As such, the present invention can be applied to any type of option device (for example, those having no electrical connections as essential function thereof, such as an ink cartridge of a printer). This effect is identical, when the truth and false judgment processing circuit 13 shown in FIG. 3 is used.

Further, in the first and second embodiments, the truth and false judgment is started by the CG signals 27, 41, respectively, so that truth and false and/or erroneous mounting can be confirmed at an arbitrary timing. If a mechanism of live wire insertion/removal is provided, it is possible to perform judgment of truth and false and/or erroneous mounting, without conducting power reset or system reset for the electronic device. Detailed explanation of concrete live wire insertion/removal method is omitted, since it is well known to an artisan.

Further, in the second embodiment, the truth and false judgment processing circuit is constituted of the ROM built-in one chip microprocessor 39 in which it is impossible to read out a program from the exterior of the chip, so that the circuit can be inexpensively constituted even in case of small quantity manufacturing.

In the second embodiment, the truth and false judgment processing circuit 13 is constituted of the ROM built-in one chip microprocessor 39 in which it is impossible to read out a program from the exterior of the chip. However, in case of massproduction, the truth and false judgment processing circuit can be constituted of a semiconductor chip having therein a circuit based on a hardwired logic which directly performs the processing of FIG. 3.

Further, in the second embodiment, there is assumed the add-in memory (RAM) module 37 as a functioning part of the option device. However, in case that a program ROM or a data ROM for realizing an added function is mounted instead of this add-in memory (RAM module 37, it is possible to prevent infringement of copyright due to illegal copying imitation of the program ROM or data ROM, even by using general purpose one for such a program ROM, data ROM or interface thereof.

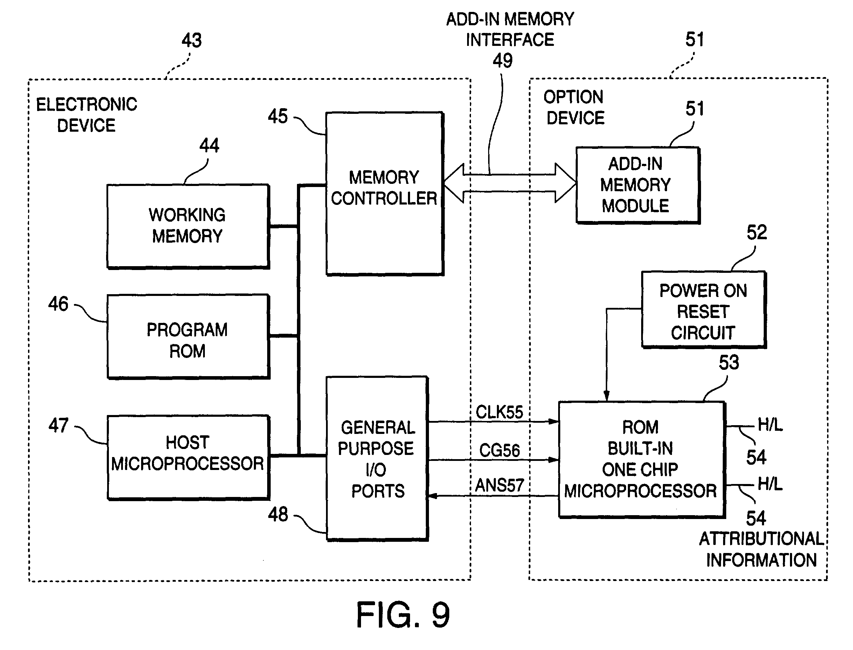

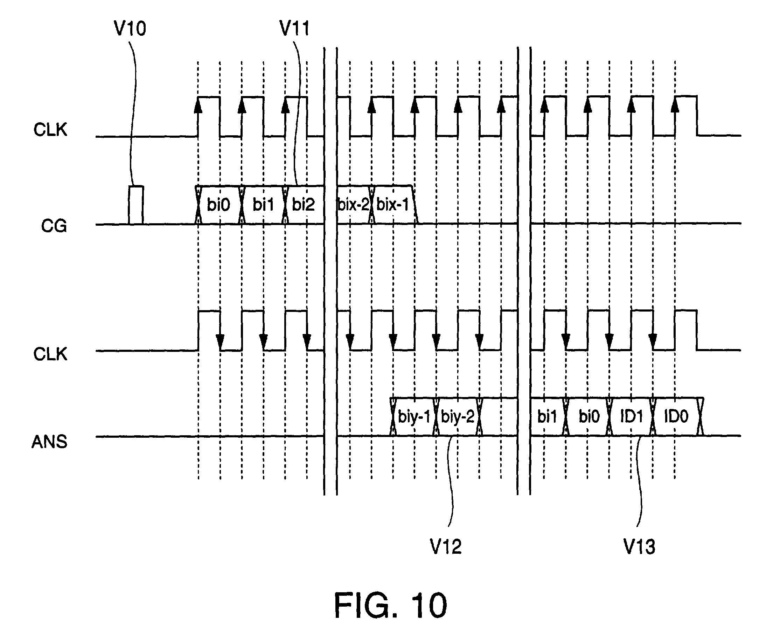

FIG. 9 is a block diagram showing a third embodiment of the present invention, and FIG. 10 is a timing chart showing its operation. The basic constitution of this embodiment is similar to that of the second embodiment of FIG. 4, but the discriminating method of option device is further elaborated.

In FIG. 9, there is supplied an attributional information 54 indicative of a type of option device, to a ROM built-in one chip microprocessor 53 corresponding to a truth and false judgment processing circuit. This signal is depicted as an image of signal from the exterior in FIG. 9 for better understanding, but this signal may be recorded in advance within an internal ROM of the ROM built-in one chip microprocessor 53. This attributional information can be transmitted as ID1 to ID0 bit (V13) following the responding bit string (bit y-1 through bit 0; V12 of FIG. 10) by the ANS signal 57. FIG. 10 shows the timing at that time.

As such, in this embodiment, host microprocessor 47 can appreciate the attribution of an option device 50 making use of these ID1 to ID0 bit (V13). Thus, there can be obtained such an effect that the host microprocessor 47 can specify such as which part of the program ROM of the electronic device is allowed to be executed, i.e., which function is to be activated, in case of an add-in memory module.

In this constitution, that part depicted as the attributional information 54 can be changedly manufactured for each one of option devices, after increasing the number of bits of the attributional information 54. In this way, option devices can be individually identified one by one.

Thus, there can be obtained such an effect that it becomes possible to detect that the option device has been exchanged, by frequently performing confirmation of the attributional information at the host microprocessor side.

## Claims

1. An imitation judging device, including:
a microprocessor which is mounted in an electronic device so as to generate an interrogating bit string for truth and false judgment; and
a truth and false judgment processing circuit, which is mounted within a target device connected to said electronic device, and which judges about truth and false of said target device based on said interrogating bit string from said microprocessor;
wherein said truth and false judgment processing circuit includes:
a calculation circuit for receiving said interrogating bit string sent from said microprocessor of said electronic device, and responsive to said interrogating bit string, generating a calculational result bit string applied with a random number calculation processing; and
a circuit for returning said calculational result bit string as a responding bit string, toward said microprocessor of said electronic device.

2. An imitation judging device of claim 1,
wherein said microprocessor compares said calculational result bit string received from said truth and false judgment processing circuit, with a reference bit string, to thereby detect truth and false of said target device.

3. An imitation judging device of claim 1 or 2,
wherein said interrogating bit string is disposed in a control signal sent from said microprocessor.

4. An imitation judging device of claim 3,
wherein said calculation circuit has a shift-register settled with an initial value as a variable for said random number calculation, and an exclusive OR circuit for calculating an exclusive OR of said interrogating bit string and said initial value.

5. An imitation judging device of claim 4,
wherein said initial value is settled in said shift-register, in response to a reset signal from said microprocessor.

6. An imitation judging device of claim 3, 4 or 5,
wherein said calculation circuit settles said initial value for said random number calculation processing based on change in said control signal, and performs said random number calculation processing based on said initial value, and said interrogating bit string in said control signal.

7. An imitation judging device of claim 1, 2, 3, 4, 5 or 6,
said circuit for returning said calculational result bit string returns said responding bit string and an attributional information indicative of a type of said target device.
